Europäisches Patentamt

European Patent Office

Office européen des brevets

(11) Publication number: 0 356 929
A1

(12) EUROPEAN PATENT APPLICATION

(21) Application number: 89115699.4

(22) Date of filing: 25.08.89

(51) Int. Cl.5: H01B 3/30 , H01B 3/46 , H01K 3/30 , H02K 3/40

(30) Priority: 30.08.88 SE 8803027

(43) Date of publication of application:
07.03.90 Bulletin 90/10

(84) Designated Contracting States:
AT BE CH DE FR GB IT LI

(71) Applicant: ASEA BROWN BOVERI AB

S-721 83 Västeras(SE)

(72) Inventor: Björklund, Anders
Björnövägen 36 A
S-723 48 Västeras(SE)
Inventor: Hjörtsberg, Arne
Solbrundsvägen 54
S-722 43 Västeras(SE)
Inventor: Holmström, Göran
Källhagsgatan 1 L
S-723 36 Västeras(SE)
Inventor: Johansson, Lennart
Smältverksgatan 69
S-724 74 Västeras(SE)
Inventor: Langberg, Lennart
Fornforskargatan 104
S-723 53 Västeras(SE)

(74) Representative: Boecker, Joachim, Dr.-Ing.
Rathenauplatz 2-8
D-6000 Frankfurt a.M. 1(DE)

(54) Electrical conductor with a surrounding electrical insulation.

(57) Electrical conductor (10) with a surrounding electrical insulation (11) in the form of an organic polymer containing at least 10 per cent by volume of a powdered filler in the form of chromium oxide ($Cr_2O_3$), iron oxide ($Fe_2O_3$) with an intrinsic resistivity of $10^4$ -$10^8$ ohm m, metal phthalocyanine, or a mixture of at least two of said substances. The filler in superficially located parts of the insulation protects the underlying parts of the insulation against degradation caused by corona. The chromium oxide and metal phthalocyanine preferably have an intrinsic resistivity of $10^4$-$10^8$ ohm m and the insulation (11) preferably a resistivity in excess of $10^{10}$ ohm m. The conductor may, inter alia, be used in windings and coils for electrical machines.

FIG.1

## Electrical conductor with a surrounding electrical insulation

The present invention relates to an electrical conductor with a surrounding electrical insulation according to the precharacterising part of claim 1.

US-A-4,493,873 and US-A-4,546,041 describe an electrical conductor which is provided with an electrical insulation consisting of a layer arranged on the conductor in the form of an organic polymer containing finely-divided aluminium oxide. The incorporation of the aluminium oxide in the insulation increases the resistance of the insulation against corona (partial or silent discharges).

The invention aims at developing an electrical conductor of the above-mentioned kind whose surrounding insulation of organic polymer shows a markedly increased resistance against corona discharges.

To achieve this aim the invention suggests an electrical conductor with a surrounding electrical insulation according to the introductory part of claim 1, which is characterized by the features of the characterizing part of claim 1.

Further developments of this electrical conductor are characterized by the features of the dependent claims 2 to 6.

The invention furthers consists in the use of the afore-mentioned electrical conductor for coils in electrical machines as specified in claim 7.

According to the present invention, it has been found to be possible to provide an insulated conductor whose insulation withstands corona for a considerably longer period of time than the insulation of known conductor.

The aluminium oxide used in the described, known insulation has a considerably higher intrinsic resistivity than the chromium oxide, the iron oxide of the stated kind and the metal phthalocyanine. It is therefore surprising and was completely unpredictable that the chromium oxide, iron oxide and metal phthalocyanine, which are more low-resistive insulating materials than aluminium oxide, give a better insulation than the corresponding insulation with aluminium oxide. One possible explanation of the favourable results obtained according to the invention may be that the corona sputters away insulating polymer material from the surface of the insulation and that then, when using chromium oxide or iron oxide as filler, superficially exposed chromium oxide or iron oxide, because of its lower resistivity, increases the electrical conductivity in the surface layer of the insulation sufficiently for the extremely concentrated effect of a corona discharge to be dissipated over a larger surface thus reducing the effect of the corona discharge considerably. Also when using metal phthalocyanine, it is assumed that the corona discharge is spread over a larger surface. Because of this process, underlying parts of the insulation are protected against degradation by corona discharges.

As examples of usable metal phthalocyanines may be mentioned phthalocyanines of copper, iron, nickel, cobalt, magnesium, aluminium, maganese, tin, chromium, and zinc, separately or in a mixture. Particularly preferred, among other things for economical reasons, is copper phthalocyanine, and then particularly $\alpha$-copper phthalocyanine.

The chromium oxide and the metal phthalocyanine, respectively, preferably have a intrinsic resistivity of $10^4$-$10^8$ ohm m.

The filler-containing insulating material preferably has a resistivity in excess of $10^{10}$ ohm m.

The content of the stated filler preferably amounts to 10-40% of the total volume of organic polymer and stated filler in the insulation.

The thickness of the insulating material suitably amounts to 5-1000 $\mu$m, preferably to 20-200 $\mu$m.

The particle size of the mentioned filler is suitably 0.005-30 $\mu$m and preferably 0.005-5 $\mu$m. When using a particle size of 0.15-10 $\mu$m an especially good flexibility of the insulation is achieved and the processing of the insulation is facilitated.

A special advantage of chromium is that it gives the film a corona resistance which is not, or only insignificantly, reduced by the influence of external factors, such as moisture.

A particular advantage of the cyanine is that it gives the film a particularly low loss factor.

The organic polymer in the protective layer may, among other things, consist of a wire enamel of such types as are normally used when enamelling winding wire such as a terephtalic acid alkyds, polyester imides, polyamide imides, polyimides, polyurethanes, epoxy resins, polysulfones, silicones, polyamides, and polymers based on polyhydantoin.

The electrical conductor according to the invention is in the form of a wire, rod, band, or bar, i.e. is elongated with a round or multi-corner constant cross section. It may be used to advantage in windings for electrical machines, electrical transformers and other electrical high voltage equipment of a varying kind in which the insulation of the conductor can be exposed to corona.

The insulation may possibly contain other components than the organic polymer and the stated powdered filler. Thus, it may contain, among other things, a fibrous material for reinforcement or spacing, for example a glass-fibre winding embedded in the insulation.

The conductor may be surrounded by additional layers, besides the filler-containing insulation, for example a layer located inside the insulation for increasing the adhesion between conductor and insulation, or a layer located outside the insulation which serves as a diffusion barrier against moisture or is applied to provide a particularly good surface finish. However, such layers do not have the task of serving as electrical insulation for the conductor, as does the filler-containing insulation according to the invention. The electrical insulation according to the invention always absorbs the main part of the electric stress to which the material surrounding the conductor is subjected.

By way of example, the invention will now be described in greater detail with reference to the accompanying drawings showing in

Figures 1-3 different embodiments of an insulated electrical conductor according to the invention,

Figure 4 a side view of a coil for an electrical machine, built up with a conductor according to the present invention,

Figure 5 a cross-section of the coil shown in Figure 4.

The chromium oxide ($Cr_2O_3$) used in the examples has an intrinsic resistivity of $10^6$ ohm m.

Example 1

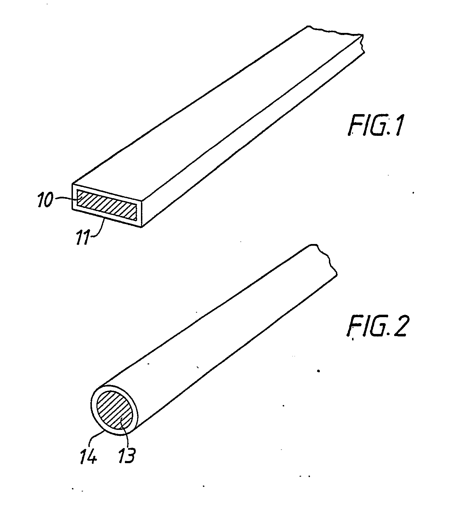

A rectangular cross-sectional wire 10 of 10 mm x 2 mm, according to Figure 1, is coated with an epoxy resin containing chromium oxide ($Cr_2O_3$) with a particle size of less than 5 $\mu$m in a conventional manner using multipass coating and wiping dies or felts, the wire passing twelve times through the wiping devices and a heating device with a temperature of about 400°C of curing the enamel, the increase in thickness upon each passage becoming approximately 5 $\mu$m. The finished insulation 11 thus has a thickness of about 60 $\mu$m. Of this insulation applied directly on the conductor, 25% by volume constitutes chromium oxide. The epoxy resin used for the application of the insulation may consist of 100 parts by weight of an epoxy resin of bisphenol A-type containing 5.15-5.5 moles epoxy groups per kg (e.g. Epikote 828 from Shell, Holland), and 50 parts by weight curing agent of amino type with an amino value of 400-460 mg KOH/g, dissolved in equal parts xylene and butanol. The epoxy resin contains 25 per cent by volume chromium oxide, calculated on the solid constituents of the resin without solvent.

Example 2

- On a rectangular cross-sectional wire 10 with the cross-section of 8 mm x 2.5 mm, there is applied an insulation 11 consisting of a polyamideimide containing chromium oxide of the same kind as described in Example 1. The insulation 11 has a thickness of 60 $\mu$m and 30% of its volume consists of chromium oxide. To the polyesterimide enamel used for the application of the insulation, for example Terebec$^R$ 533 L33 from BASF, there is added chromium oxide and further cresol so that the viscosity become suitable for the application of the insulation using the same method as described in Example 1. The enamel then contains 30 per cent by volume chromium oxide, calculated on the contents of solid substance of the enamel without solvent.

Example 3

On a rectangular cross-sectional wire with the cross-section of 8 mm x 2.5 mm, there is applied an insulation 11 consisting of a polyamideimide containing chromium oxide of the same kind as described in Example 1. The insulation 11 has a thickness of 60 $\mu$m and 25% of its volume consists of chromium oxide. The polyamideimide enamel used for the application of the insulation may consist of, for example Lack E 3561/27 from Herberts GmbH, Fed. Rep. of Germany, to which chromium oxide and N-methylpyrrolidone have been added so that the viscosity becomes suitable for the application of the insulation using the same method as described in Example 1. The enamel then contains 25 per cent by volume chromium oxide, calculated on the solid constitutes of the enamel without solvent.

Example 4

A round wire 13 according to Figure 2 with a diameter of 1 mm is enamelled with an enamel of the same kind as in Example 3 but with a percentage by volume of chromium of 15%. It is applied in the manner described in Example 1 but using dies instead of wiping devices to form an insulation in the form of an enamel layer 14 with a thickness of 40 $\mu$m.

Example 5

A rectangular cross-sectional wire 10 according to Figure 1 with the cross-section of 10 mm x 2 mm is provided with an insulation 11 in the form of a wrapping of glass yarn which has been impregnated with a binder in the form of an epoxy resin, to which chromium oxide ($Cr_2O_3$) has been added and which has thereafter been cured. The epoxy resin may consist of a polyamide-modified epoxy resin (such as AF-42 from Minnesota Mining and Manufacturing Company, USA), or of an epoxy resin of the kind described in Example 1. The insulating layer 11 has a thickness of 100 μm and its binder contains 20 per cent by volume chromium oxide with a particle size of less than 5 μm.

Example 6

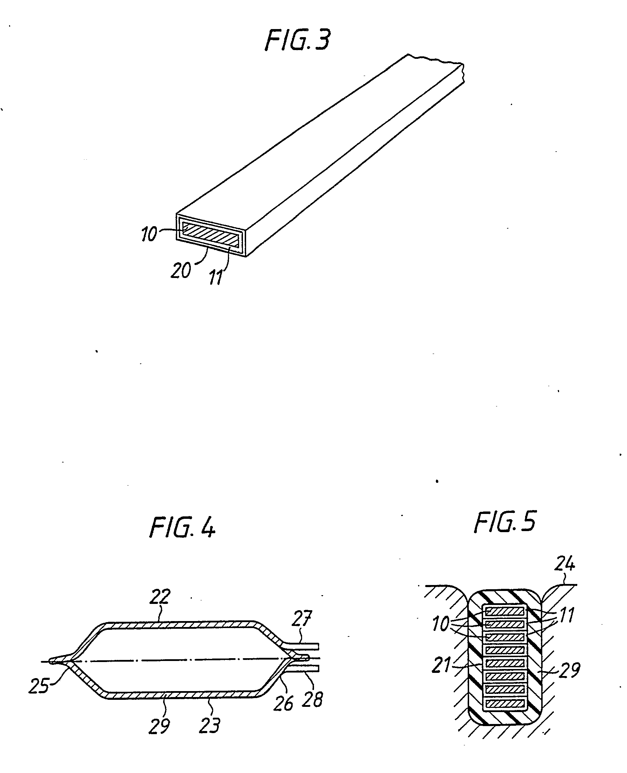

A rectangular cross-sectional wire according to Figure 3 with the cross-section of 10 mm x 2 mm is supplied with an insulation 11 of the kind described in Example 1. On the insulation 11 there is applied a coating 20 in the form of a polyamideimide enamel, for example Lack E 3561/27 from Herberts GmbH, Fed. Rep. of Germany, in a thickness of 10 μm. The coating can be applied in accordance with the method using multipass coating and wiping dies or felts, the wire passing through wiping equipment and associated heating equipment with a temperature of about 400° C two times with an increase in thickness of the coating of about 5 μm upon each passage, so that a thickness of about 10 μm is attained in the finished coating.

Instead of chromium oxide ($Cr_2O_3$) in the cases exemplified above there can be used an equally large percentage by volume of iron oxide ($Fe_2O_3$) with the same intrinsic resistivity and with the same size of the particles, or an equally large percentage by volume of copper phthalocyanine with the same intrinsic resistivity, or an equally large percentage of a mixture of two or all of these fillers in arbitrary proportions, for example in equal parts by volume. Instead of copper phthalocyanine another metal phthalocyanine, such as nickel, cobalt, or iron phthalocyanine can be used.

A conductor according to the present invention is excellently well suited for use in coils for electrical machines for operating voltages in excess of 2 kV, for example traction motors, especially such having convertor operation. In such coils there are normally arranged around the conductor insulation layers of mica to make the conductor insulations resistant to the attack of corona. When using conductors according to the invention in such coils, it is possible to make the insulation and the corona protection around the conductors considerably thinner than when using the known corona-resistant conductor insulation described above. In that way more conductor material can be incorporated into the coil, which means that for a certain machine dimension a greater power can be attained or for a certain machine power, the machine dimension can be reduced.

A coil as described above comprises a bundle of a plurality of lengths, arranged side-by-side, of a conductor according to the invention of rectangular cross-section and a main insulation surrounding the conductor bundle for insulation of the bundle against the walls of the machine slot.

The conductor bundle may consist of several turns of one single conductor, which has been bent to form the final shape of the bundle. It may also consist of several separate insulated conductors, often called strands, which at their ends are electrically connected to one another, usually in parallel. Particularly great advantages are obtained according to the invention for the first-mentioned type of conductor bundle since the stresses between adjacent conductors in this case are greater and a short circuit caused by a damaged conductor insulation is more serious.

The main insulation may be formed in different previously well-known ways. Thus, it may consist of a wrapping of mica tapes or mica sheets. These may be made of mica flakes of conventional kind, which, for example a varnish binder such as an alkyd or a thin thermoplastic resin, are attached to a carrier material of paper, woven glass fibre or the like. The mica materials may also consist of self-supporting tapes or sheets of small mica flakes overlapping each other, which are manufactured by splitting of ordinary mica, these mica materials usually also being attached to a carrier material.

On the above-mentioned mica tapes or sheets, a binder may be applied which later on, when the materials are applied around the conductor bundle, bind the different layers in the conductor insulation to one another. Such a binder may, however, instead be supplied after the mica material has been applied around the conductor bundle by an impregnation. As examples of suitable binders for the turns of the wrapping may be mentioned solvent-free resins such as epoxy resins and unsaturated polyester resins.

A conductor provided with an insulation, of a kind described in any of Examples 1-3 and 5-6, is bent to form a coil containing a plurality of turns of the conductor lying side by side as shown in Figures 4 and 5, respectively. These turns positioned side-by-side form the conductor bundle 21 of the coil. As will be clear from Figure 4, the bending is performed such that the coil has straight parts 22 and 23, intended to be places in the slots 24 of the machine, and bent end parts 25 and 26 which extend outside the slots. The terminals of the coil are designated 27 and 28. To effectively bind adjacently positioned lengths of the insulated conductor to each other, the insulated conductor may be provided with a coating, which is thin in relation to the insulation, of an adhesive, for example in the form of polyamide-modified epoxy resin (such as AF-42 from Minnesota Mining and Manufacturing Company), preferably containing at least 10 per cent by volume $Cr_2O_3$ $Fe_2O_3$, copper phthalocyanine with an intrinsic resistivity of $10^4$-$10^8$ ohm m, or in all at least 10 per cent by volume of at least two of these substances. After the bending of the conductor, the resin is cured by heating to 160° C.

The conductor bundle 21 is then wound turn-by-turn with, for example, half an overlap with a 25 μm wide mica tape consisting of an 0.09 mm thick self-supporting layer of small mica flakes, overlapping each other, fixed to an 0.04 mm thick woven glass fibre tape with an 0.006 mm thick polyethyleneglycol terephthalate foil. Such an insulating tape is described in the SE-B-200 820. When the bundle has been provided with a wrapping 29 of, for example, twenty layers, located one above the other, of the mica tape, the winding is first dried at a pressure of 0.1 mm Hg and at a temperature of 40° C, whereupon an impregnating resin is supplied at this pressure. When all impregnating resin has been supplied, the pressure is increased to, for example, 10 kp/cm². The resin may consist of 100 parts by weight of an epoxy resin, which in a known manner is manufactured from epichlorhydrin and 4.4'-dioxydiphenyl dimethylmethane and which has an epoxy equivalent of 192, and 100 parts by weight of a curing agent consisting of a mixture of 75 parts by weight hexahydrophthalic acid anhydride and 25 part by weight tetrahydrophthalic acid anhydride. To prevent the resin from penetrating out of the insulation during the subsequent curing operation, the impregnated conductor bundle with the mica tape wrapping may be surrounded by a sealing tape of polytetrafluoro ethylene or the like. The coil is then placed in a forming tool for curing the resinous mate rial. The curing is performed at a temperature of about 160° C for a period of about 10 hours.

In an alternative embodiment, a coil is manufactured using an insulating tape which is impregnated with impregnating resin prior to its winding around the bundle 21 (Figure 5), which may be of the same kind as in the example above. The resin contains an unsaturated ester resin manufactured of adipic acid (11 mole per cent), phthalic acid anhydride (11 mole per cent), maleic acid anhydride (23 mole per cent) and ethylene glycol (55 mole per cent), and to which are added diallylphthalate in such an amount that the diallylphthalate constitutes 40% of the total weight of ester resin and diallylphthalate as well as benzoyl peroxide in an amount corresponding to 1% of the weight of the entire resin. The ester resin itself can be manufactured by reaction of a mixture of the acids mentioned and the alcohol in inert atmosphere by increasing the temperature to 220° C and maintaining this temperature until the acid value of the reaction product is about 30. Prior to the impregnation of the insulating tape, 100 parts by weight of the resin are diluted with 100 parts by weight acetone. The insulating tape, which may be of the same kind as that described above, can be impregnated with the resinous material at room temperature and atmospheric pressure. The impregnated mica tape is then wound, after driving off the solvent, around the conductor bundle 21 with half an overlap into thirty layers, located one above the other, to form the main insulation 29. The coil is then placed in a forming tool for curing the resinous material at a temperature of 160° C for a period of three hours.

Although many unsaturated polyester resins ans epoxy resins suited for impregnation of electrical insulations are known, some additional examples of such resins will be mentioned. Thus, there may be used, for example, a polyester resin con sisting of 60 parts by weight of a reaction product of 3 moles maleic acid anhydride, 1 mole adipic acid and 4.4 moles ethylene glycol with an acid value of 30, and of 40 parts by weight diallylphthalate and containing 0.75% benzoyl peroxide and a polyester resin consisting of 70 parts ba weight of a reaction product of 1 mole fumaric acid, 1 mole phthalic acid and 2.2 moles propylene glycol with an acid value of 25, and of 30 parts by weight monostyrene and containing 0.5% benzoyl peroxide, as well as an epoxy resin consisting of 100 parts by weight "Epon 828" (Shell Chemical Co.) and 65 parts hexahydrophthalic acid anhydride, an epoxy resin consisting of 85 parts "Araldit F", 100 parts by weight "Curing Agent 905" (both from Ciba AG, Switzerland) and 15 parts by weight phenylglycidyl ether, an epoxy resin consisting of 100 parts by weight "DER 331" Dow Chemical Co.) and 65 parts by weight tetrahydrophthalic acid anhydride or 100 parts by weight of epoxy novolak "DEN 438" (Dow Chemical Co.) and 3 parts by weight of the boron trifluoride complex "HZ 935 J 50" (Ciba Geigy AG).

## Claims

1. Electrical conductor (10, 13) with a surrounding electrical insulation (11, 14) in the form of an organic polymer containing a powdered filler protecting the insulation against degradation caused by corona, **characterized** in that the insulation contains a powdered filler in the form of chromium oxide ($Cr_2O_3$), iron oxide ($Fe_2O_3$) with an intrinsic resistivity of $10^4$ -$10^8$ ohm m, metal phthalocyanine, or a mixture of at least two of said substances in such a content that the amount of the powdered filler constitutes at least 10 per cent of the total volume of the organic polymer and the powdered filler.

2. Electrical conductor according to claim 1, **characterized** in that the metal phthalocyanine consists of copper phthalocyanine.

3. Electrical conductor according to claim 1 or 2, **characterized** in that the chromium oxide or metal phthalocyanine in the insulation (11, 14) has an intrinsic resistivity of $10^4$-$10^8$ ohm m.

4. Electrical conductor according to any of claims 1-3, **characterized** in that the insulation (11, 14) has a resistivity in excess of $10^{10}$ ohm m.

5. Electrical conductor according to any of the preceding claims, **characterized** in that the content of powdered filler in the form of chromium oxide, iron oxide, metal phthalocyanine or a mixture of at least two of said substances constitutes 10-40% of the total volume of organic polymer and this powdered filler.

6. Electrical conductor according to any of the preceding claims, **characterized** in that the organic polymer consists of a cured resinous binder.

7. The use of a conductor (10) according to any of the preceding claims in a coil which is arranged in slots (24) in a stator or rotor of an electrical machine and which comprises a bundle (21) of a plurality of lengths of such a conductor with rectangular cross section, arranged side-by-side, and a main insulation (29) surrounding the bundle for insulating the bundle against the walls of the machine slots.

17.08.1989
22 168 PE

FIG.1

10
11

FIG.2

14 13

17.08.1989
22 168 PE

## FIG.3

## FIG.4

## FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | SE-A-8504809-8 (ASEA AB),17 April 1987 *See whole document* | 1,3-7 | H 01 B 3/30- 3/46 |
| A | CHEMICAL ABSTRACTS, vol. 82 (1975), no. 11, 17 March 1975, page 97, left-hand column, no. 59343k, Columbus Ohio (USA); & JP - A - 74 19 694 (NITTO ELEC-TRIC INDUSTRIAL CO., LTD.) (20-05-1974) *Abstract* | 2 | H 02 K 3/30, 3/40 |
| E | SE-B-457 031 (ASEA AB) 21 November 1988 *See whole document* | | |

**TECHNICAL FIELDS SEARCHED (Int. Cl.4)**

H 01 B

H 02 K

The present search report has been drawn up for all claims

| Place of search | Date of completion of the search | Examiner |
|---|---|---|
| STOCKHOLM | 27-11-1989 | FALK I. |